# EUROPEAN PATENT SPECIFICATION

(11) **EP 2 730 366 B1**
(45) Date of publication and mention of the grant of the patent: **31.08.2016**
(21) Application number: 13192025.8
(22) Date of filing: 07.11.2013
(51) Int. Cl.: B23P 15/14, B21D 53/28, F16H 55/26, E05F 15/635

(54) **Rack, in particular for a slidable gate, and process for the obtainment thereof**
Zahnstange, insbesondere für ein verschiebbares Gate, und Verfahren zu ihrer Herstellung
Crémaillère, notamment pour une porte coulissante et procédé d'obtention associé

(30) Priority: 07.11.2012 IT PD20120331
(43) Date of publication of application: 14.05.2014
(73) Proprietor: Fratelli Comunello S.p.A., 36027 Rosà (Vicenza) (IT)
(72) Inventor: Comunello, Franco, I-36027 Rosà (VI) (IT)
(74) Representative: Gallo, Luca

(56) References cited:
- EP-A1- 2 163 789
- JP-A- 2002 263 761
- NL-C1- 1 004 700
- US-A- 1 670 476
- US-A- 3 711 915

## Description

### Field of application

The present invention regards a rack, in particular for a slidable gate, and a process for the obtainment thereof, according to the preamble of the respective independent claims.

The present rack is advantageously inserted in the field of production of gate accessories, employable for delimiting an entrance passage, for vehicles or pedestrians, for the access to a property, structure, company, building or garden. The rack is for example intended to be fixed at the lower edge of the gate and to be engaged with the pinion of a motor, usually fixed to the ground next to the gate itself.

The rack, object of the present invention, can of course also be applied in other positions of the gate (e.g. at an upper bar) or more generally it can be employed in other mechanical applications in order to transmit the motion of the pinion of a motor to a movable element.

### State of the art

Currently, as is known, the slidable gates with mechanized movement conventionally comprise a support framework, below which the rack is fixed along the extension of the gate.

Conventionally, the aforesaid movement is obtained by means of a motor housed in a box placed alongside the gate; from such motor, a pinion projects that comes to be engaged in the rack fixed to the gate, at one side thereof, i.e. laterally on the monorail. The pinion can have preferably horizontal axis, and consequently the rack will have the teeth directed outwardly from one side of the gate.

In the case of slidable carriages, in order to allow the movement between the closed and open positions, two or more idle wheels are mounted in line below the frame; such wheels slide in a guided manner on a track embedded in the concrete. Otherwise, in the case of gates of cantilever type, at least two carriages are provided, spaced from each other and aligned in the advancing direction of the gate. Each carriage is rigidly constrained to the ground by means of a structure equipped with foundations, and it is provided with a plurality of idle wheels inserted inside a monorail fixed to the lower crosspiece of the gate in order to guide the latter during its opening and closing movement.

In order to conceal the rack, gates have more recently arrived on the market that have a metal support profile fixed laterally to the gate, with a rack associated that is directed towards the ground and engaged by a motorized pinion susceptible of rotating around a horizontal axis.

The racks for gates currently known and present on the market are obtained in a single body made of metal, usually steel, and have thickness greater than 8 mm, and usually 8 or 12 mm, even though for some large-gate applications thicknesses of over 30 mm are provided.

The production process for the racks conventionally provides for the creation of metal bars obtained through hot rolling with the desired thickness and height. On such bars, teeth are created by means of removal of material, e.g. with slotting operations (processing with a tool with alternating rectilinear vertical motion) or with milling operations (cutting processing with a tool adapted to erode the material, obtaining the form of the teeth).

The thicknesses of the racks required for a correct engagement with the pinion of the motor and for safely resisting all the stresses transmitted by the pinion following, for example, the starting or stopping of the gate, do not allow obtaining the teeth from the steel bars with shearing operations via press or punching machine.

Therefore an important drawback of the production processes currently known for obtaining racks lies in the high cost, mainly due to the impossibility of obtaining high-quality teeth, in tolerance and with inexpensive and quick shearing operations.

A further drawback of the production processes currently known for obtaining racks lies in the need to subject the wire rods, obtained in the desired thickness by means of hot rolling processes, to additional surface operations by means of washing and pickling operations for the removal of calamine and subsequent galvanizing operations, which negatively affect the overall cost of the finished product.

Document US 3,711,915 discloses a rack consisting of two flat plates, linearly elongated in a predominant longitudinal extension, bearing toothings, each formed by a sequence of parallel teeth. The two plates are realized by a cutting torch and are secured together in side-by-side relationship so that the teeth of the toothing of a plate are arranged aligned with the teeth of the toothing of the other plate. This rack is very expansive to be produced.

Document NL 1004700 discloses a mechanical body consisting of two flat portions joined together by a transversal portion; the two flat portions are facing and substantially parallel to each other, and have first longitudinal connection ends joined together by said transversal portion, and second longitudinal ends bearing toothings, each formed by a sequence of parallel teeth; the two flat portions with the two toothings form two corresponding racks suitable to be independently engaged by a separate gear wheel. The two racks are separated by a guide for a wheel. Also this well known rack is very expansive to be produced.

### Presentation of the invention

In this situation, the problem underlying the present invention is therefore that of eliminating the drawbacks of the art known up to now, by providing a process for obtaining a rack, which is particularly inexpensive and at the same time quick to achieve. A further object of the present finding is to provide a process for obtaining a rack that is operatively simple to obtain and which employs machines that are not particularly costly and commonly used in the processing of metal sheets, and in particular in the processing of metal sheet strips with low thickness.

A further object of the present finding is to provide a rack, in particular for gates, which is structurally simple, inexpensive to achieve and entirely reliable in operation.

A further object of the present finding is to provide a rack, in particular for gates, which is simple to install on the structure of the gate.

A further object of the present finding is to provide a rack, in particular for gates, which is mechanically resistant to all possible stresses transmitted thereto by the pinion of the gate movement motor.

A further object of the present finding is to provide a rack, in particular for gates, which does not negatively affect the aesthetics of the gate, allowing an architectural design entirely free of mechanical requirements.

The above objects are achieved by the features of the independent claims of the present invention. Preferred embodiments are presented in the dependent claims.

### Brief description of the drawings

The technical characteristics of the finding, according to the aforesaid objects, can be clearly found in the contents of the below-reported claims and the advantages thereof will be more evident in the following detailed description, made with reference to the enclosed drawings, which represent a merely exemplifying and non-limiting embodiment of the invention, in which:
**FIG. 1** shows an overall perspective view of a rack, object of the present invention, mounted on a slidable gate illustrated only in part;

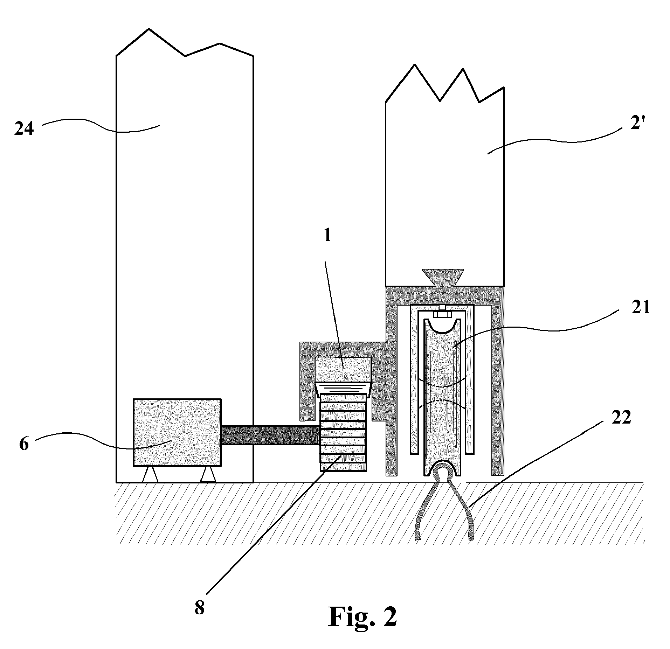

**FIG. 2** shows a front schematic view of a rack, object of the present invention, mounted on a slidable gate illustrated only in part and with several parts removed in order to better illustrate others;
**FIG. 3** shows a perspective image of a portion of the rack, object of the present invention;
**FIG. 4** shows a perspective view of a first embodiment of the rack, object of the present invention, schematically illustrated only in an initial portion thereof;
**FIG. 5** shows a perspective view of a second embodiment of the rack, object of the present invention, schematically illustrated only in an initial portion thereof;

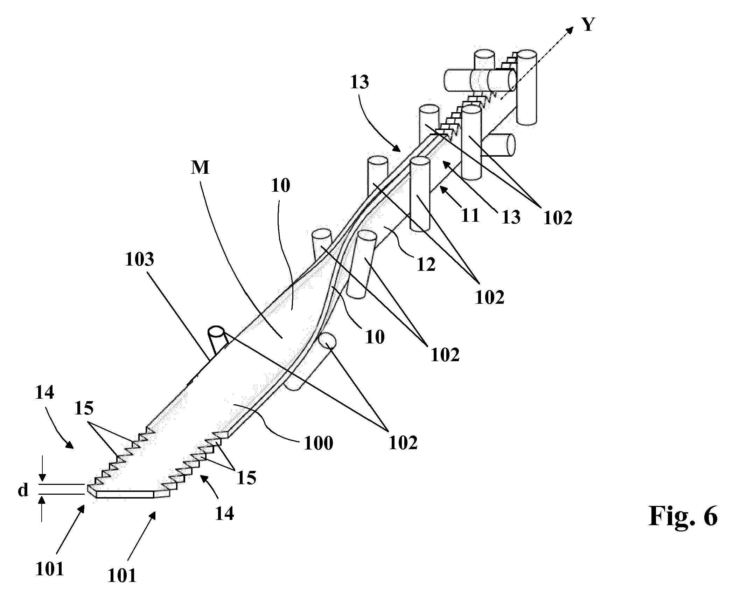

**FIG. 6** shows a schematic view of a step of processing a metal strip for obtaining a rack, in particular for gates, object of the present invention.

### Detailed description of a preferred embodiment

With reference to the enclosed drawings, reference number 1 indicates an embodiment of a rack, object of the present invention, intended to be advantageously mounted on a slidable gate.

Of course, within the protective scope of the present patent, as defined in the claims, the rack can be employed for moving any one other slidable body, different from the gate, and it can be obtained in the desired length.

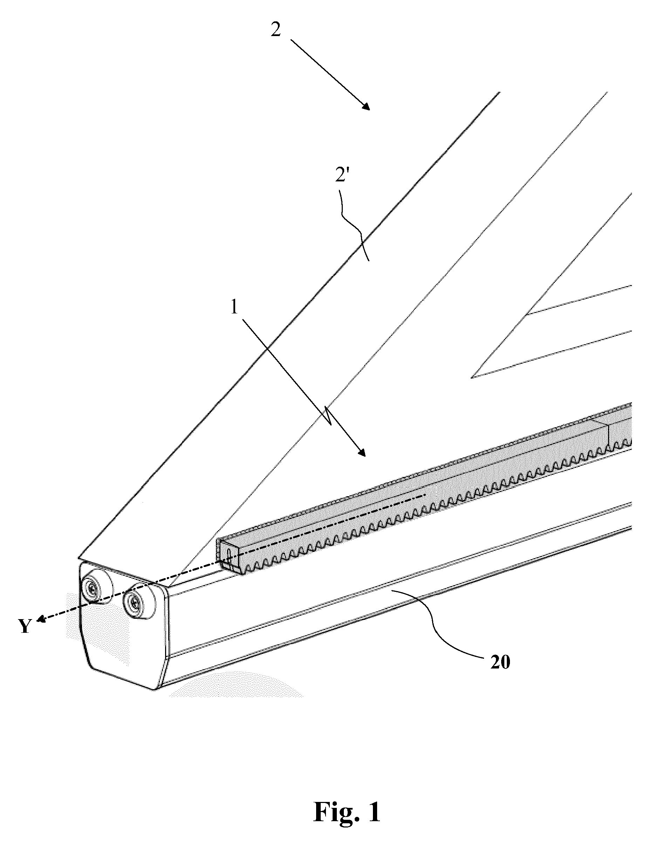

Therefore, hereinbelow, in order to simplify the description reference will be made to the preferred application of the rack, object of the present invention, i.e. the application to a slidable gate 2, indicated of cantilever type in the embodiment of the enclosed figure 1. More in detail in accordance with such figure, the gate 2 is extended with its load-bearing structure 2' mainly along an advancement direction X with respect to which it can be normally moved between an open position and a closed position.

For such purpose, the gate 2 is supported by means of wheels 21 on a track 22 fixed to the ground, or, in accordance with the embodiment illustrated in figure 1, it is supported and guided by carriages fixed to the ground (not illustrated) and being engaged with the rollers in a rail integral with the gate 2.

Movement means are provided for moving the gate 2 along its advancement direction, which comprise the rack 1 integral with the gate 2 and a motor 6 fixed integral with the ground, placed on one side of the gate 2 and provided with a pinion 8 mechanically engaged with the rack 1.

More in detail, the rack 1 is obtained with a body made of metal material, in particular steel adapted to endure in an open environment, or for such purpose subjected to surface protection treatments, linearly elongated in a predominant longitudinal extension direction indicated with Y in the figures.

The rack 1 can be advantageously obtained by fixing multiple sections aligned with each other, e.g. of 1 meter length. Such fixing can occur for example by means of welding, or with slots obtained together with the toothing.

In accordance with the embodiment illustrated in the enclosed figures, the rack 1 is fixed to a lower crosspiece of the support structure 2' of the gate 2 with the toothing directed downward in order to be engaged with the pinion 8 of the motor 6 having horizontal rotation axis.

Of course, the rack can also be fixed with the teeth directed horizontally in order to be engaged on a pinion with vertical axis.

In any case, the rack will have mechanical strength susceptible of resisting the stresses transmitted by the movement of the gate.

According to the idea underlying the present invention the aforesaid elongated body is provided with two flat portions 10 arranged facing, substantially parallel to each other. Each flat portion 10 has a first connection end 11 with longitudinal extension that is joined to the first connection end 11 of the other flat portion with a connector portion 12, which has 180-degree shape with at least one bend and is adapted to connect the two flat portions 10 without interruption.

The rack 1 preferably has a U-shaped cross section obtained with a single bend obtained at the longitudinal median line of the elongated body made of metal material and with the two arms formed by the flat portions 10 approached or pressed on each other.

The rack 1 can otherwise have the connector portion 12 with 180-degree shape by means of two bends, each 90 degrees (or otherwise by means of multiple bends whose overall angle is 180 degrees) obtained via cold deformation of a steel strip or sheet.

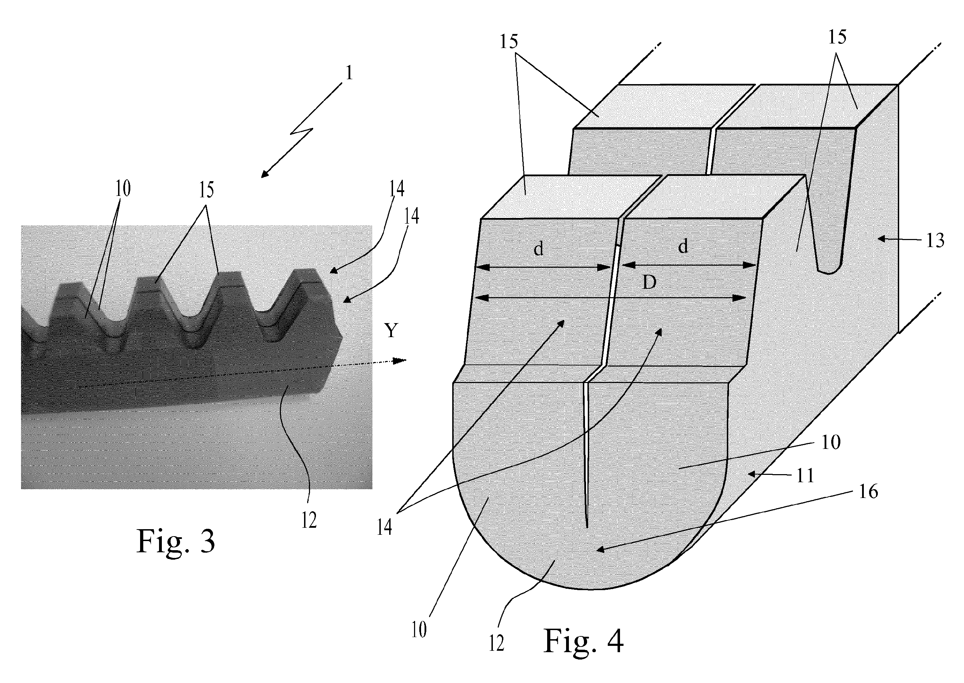

The second longitudinal ends 13 of the elongated body each bear a toothing 14 formed by a sequence of parallel teeth 15. Each sequence of teeth is then extended along the aforesaid longitudinal extension direction Y with the teeth 15 of the toothing 14 of a flat portion 10 transversely arranged aligned with the teeth 15 of the toothing 14 of the other flat portion 10 in order to allow the pinion 8 to simultaneously engage both toothings 14. In accordance with one possible embodiment illustrated in figure 4, the curved connector portion 12 with 180 degree bend has, in at least one intermediate section 16 thereof, a low thickness. Such thinning allows, as specified hereinbelow, preventing elastic returns of the two flat portions aimed to open them and at the same time allows minimizing the use of steel, representing a reduction of material.

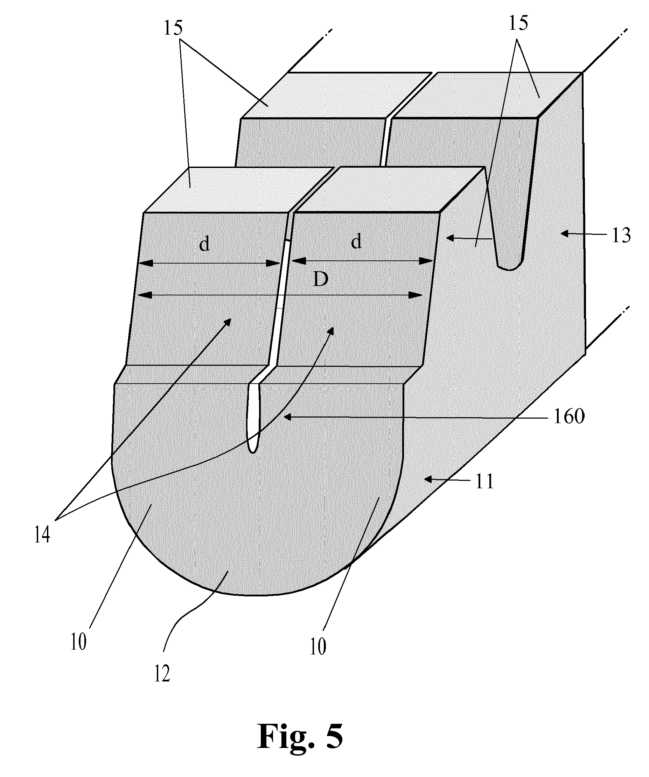

Otherwise, in accordance with a preferred embodiment of the present invention illustrated in figure 5, the connector portion 12 of the elongated body, curved with 180 degree bend, has at the bottom of the bend an enlargement or slot 160 aimed to slightly separate the two arms. Such slot is substantially closed at the top by the two approached flat portions.

Such enlargement allows directing the same arms against each other towards the second longitudinal ends 13 of the elongated body, so that the toothings 14 of the two flat portions 10 are arranged side-by-side and leaned against each other.

The connector portion 12 also performs the function of closing, from the top, the slit possibly present between the two flat portions 10, in the position at which the rack 1 is usually intended to be mounted on the frame of the gate, i.e. with the teeth 15 directed downward as represented in the enclosed figure 1. Actually, in other words, the connector portion 12 prevents the water from penetrating inside the slit, thus preventing the onset of corrosion phenomena or the opening of the same slit.

Otherwise, in accordance with a different embodiment already mentioned above, the two flat portions 10 will be arranged facing and parallel but not leaned against each other, with multiple bends that while defining the curved connector portion 12 with 180 degree bend maintain the flat portions 10 thereof spaced.

The overall transverse thickness D of the rack 1, for discharging the mechanical stresses, will in any case be substantially determined by the sum of the thicknesses d of its two flat portions 10 and will therefore have the value set by the requirements of the specific application. In the case of gates, the main thicknesses of the racks 1 are 8 or 12 mm with thicknesses of the flat portions thus respectively 4 and 6 mm. Of course, in the case of overall transverse thicknesses D of the rack 1 different from those indicated, the thicknesses of the flat portions can consequently be smaller or lower.

Preferably, nevertheless, for the simplicity of the production process and in order to resist the mechanical movement stresses of the gates, the thickness of the flat portions will be comprised between 2 mm and 6 mm.

Advantageously, such thicknesses allow applying the racks in the field of the gates, by engaging the teeth with pinions of gate movement motors without risking that the aforesaid flat portions are deformed, i.e. without requiring guide means for preventing their deformation.

Also forming an object of the present invention is a process for obtaining a rack, in particular for gates, advantageously but not exclusively obtained according to the characteristics of the above-described rack; for the sake of description simplicity, the same reference numbers will be maintained hereinbelow.

Such process comprises the operative steps described hereinbelow.

First of all, a step is provided for arranging an elongated strip 100 made of metal material, in particular steel, obtained in the desired thickness advantageously through a step of cold rolling.

The strip 100 indeed has a thickness d preferably compatible with the normal cold rolling processes, having a final thickness less than 8 mm and in particular less than 6 mm.

The elongated strip 100 is provided with a predominant longitudinal extension direction, indicated with Y in the enclosed figures, and is laterally delimited on the sides by two parallel longitudinal edges 101.

Then, the shearing is provided of the parallel longitudinal edges 101, through which there is the formation of two toothings 14 each composed by a sequence of parallel teeth 15. Each sequence of teeth 15 is extended along the aforesaid longitudinal extension direction Y.

At this point, there is a step of bending the elongated strip 100, which is carried out by means of bending of the elongated strip with respect to at least one longitudinal line parallel to the aforesaid longitudinal extension direction Y of the elongated strip.

Such step of bending by means of one or more bends is aimed to arrange, facing and parallel to each other, two flat portions 10 of the elongated strip 100 placed at the sides of the median line M, creating a connector portion 12 curved 180° at the latter.

The two flat portions 10 first have longitudinal connection ends 11 joined together due to the curved connector portion 12 with 180 degree bend at the line of bending and second longitudinal ends 13 bearing the aforesaid toothings 14.

More in detail, in accordance with the embodiment illustrated in the enclosed figures, the bending step is obtained with a single bend carried out with respect to the median longitudinal line M, by deforming the connector portion 12 in the form of U curved 180°.

Otherwise, in accordance with a further embodiment not illustrated in detail in the enclosed figures, the connector portion 12 has 180-degree shape by means of said bending step, with two or more bends carried out along two or more corresponding longitudinal lines parallel to the extension of the elongated strip 100.

The bending step, whether obtained with a single median bend or with multiple parallel bends, is in any case achieved by means of cold deformation of the strip.

The arrangement of the teeth 15 of the two toothings is obtained during the shearing step with the teeth transversely aligned on the two portions 10, in a manner such that after the bending step the same teeth 15 of the toothing 14 of each flat portion 10 are maintained aligned with the teeth of the toothing of the other flat portion 10.

In accordance with one embodiment of the process, object of the present invention, in the case of a single bend, in order to facilitate the bending of the elongated strip 100 and oppose the elastic opening return of the flat portions 10 after the bending step, a step of thinning the elongated strip 100 at the median longitudinal line M is provided for, carried out after the shearing step and before the bending step.

Such thinning step is advantageously obtained without removal of material by simple deformation through compression, in particular with roller aimed at transversely enlarging the elongated strip 100 by compressing it at the median longitudinal line M.

In accordance with the preferred embodiment of the process, object of the present invention, still in the case of a single bend, the bending step initially provides for bending the flat portions 10, orienting them with tilt towards each other and then closing the bend created in the connector portion 12 in order to force the approaching of the two flat portions 10 against each other. Such process can lead to having a greater distance of the arms of the U-shaped section at the bottom of the bend with respect to the second longitudinal ends 13 with the associated toothings 14. Such displacement at the bend is indicated with 160 in figure 5.

The step of shearing the elongated strip 100 at its parallel longitudinal edges 101 for the formation of two toothings 14, each composed of a sequence of parallel teeth 15 that are transversely aligned with those of the other toothing 14 is preferably obtained by means of a metal sheet shearing press well-known to the man skilled in the art.

Such machine, as is known, is particularly suitable for shearing sheet metal such as steel for not particularly high thicknesses, preferably 4 or 6 mm and in any case less than 8 mm.

In turn, the bending step is obtained preferably by acting via a forming machine on the elongated strip 100 whose parallel longitudinal edges 101 are already cut.

The forming machine is provided with a plurality of pairs of rollers 102, which sequentially deform the elongated strip 100, bringing it from a flattened conformation to a bent conformation with one or more longitudinal bends adapted to shape the connector portion 12 substantially 180 degrees.

A single bend can be provided for, along a median longitudinal line adapted to confer a substantially U-shaped form to the connector portion 12, or two 90-degree bends can be provided for (i.e. multiple bends whose overall angular sum is equal to 180 degrees) adapted to confer an overall U-shaped 180-degree form to the connector portion 12 with the two parallel and facing flat portions 10 joined by an orthogonal flat intermediate portion that acts as a spacer between the two flat portions 10.

The thinning step mentioned above can advantageously be obtained by means of a compression roller (not illustrated) mounted on the same forming machine in central position with respect to the width of the elongated strip 100.

In the case of use of a forming machine, the elongated strip 100 must have a continuous extension, or it will have length such to be driven by the rollers of the forming machine (e.g. being unwound by a coil). At the same time, the same elongated strip 100 will be cut before entering the forming machine by means of the press, still in the form of continuous strip.

The cut and folded strip, as described above, assumes the shape of a continuous rack and is separated into sections with predefined length that are fixed in a row on the frame of the gate 2, advantageously via welding or via fixing, by means of spacers and screws, at a base crosspiece thereof (or also at the rail in the gates of cantilever type) in order to obtain the rack of the desired length, generally equal to that of the gate.

Otherwise, in place of the shearing press and the forming machine, only one machine can be used, i.e. a press with multiple stations in series, in which sections of elongated strip are first cut (shearing step) at the longitudinal edges 101 in a first shearing station (or of a first series of stations) and then bent 180 degrees with one or more bends (bending step) at longitudinal lines parallel to the extension of the strip (i.e. in the case of a single bend at the median line M of the strip) in subsequent bending stations. In the case of a single median bend, there can for example be two bending stations in succession, of which the first is adapted to form the elongated strip 100 with the two flat portions 10 bent 90 degrees and the second, after the movement of the section bend in a suitable position, is adapted to close the two flat portions 10 against each other in order to form the 180 degree bend.

Of course, in the practical achievement thereof, it can also assume shapes and configurations that are different from that illustrated above, within the present protective scope as defined in the claims

## Claims

1. Rack, in particular for a slidable gate, **characterized in that** it comprises a body linearly elongated in a predominant longitudinal extension direction (Y), provided with two flat portions (10) that are facing and substantially parallel to each other, having first longitudinal connection ends (11) joined together by a connector portion (12) that has 180-degree shape by means of at least one bend obtained via cold deformation of a metal strip or sheet, and second longitudinal ends (13) bearing toothings (14), each formed by a sequence of parallel teeth (15) which is extended along said longitudinal extension direction (Y) with the teeth (15) of the toothing (14) of a flat portion (10) arranged aligned with the teeth (15) of the toothing (14) of the other flat portion (10), in order to allow a pinion (8) to simultaneously engage both toothings 14.

2. Rack according to claim 1, **characterized in that** said linearly elongated body is made of steel.

3. Rack according to claim 1, **characterized in that** said connector portion (12) is shaped with a 180-degree U-shaped bend.

4. Rack according to claim 3, **characterized in that** said connector portion (12) defines a slot (160) substantially closed at the top by said two facing flat portions (10).

5. Rack according to claim 3, **characterized in that** said connector portion (12) shaped with a 180-degree U-shaped bend has, in at least one intermediate section thereof (16), a low thickness.

6. Rack according to claim 1, **characterized in that** said connector portion (12) has 180-degree shape by means of two or more bends obtained via cold deformation of a strip or plate of steel.

7. Rack according to any one of the preceding claims, **characterized in that** the portions (10, 12) of said elongated body have cross section comprised between 2 and 6mm.

8. Process for obtaining a rack, in particular for slidable gates, **characterized in that** it comprises the following operative steps:
- arranging an elongated strip (100) made of metal material provided with a predominant longitudinal extension direction (Y) and laterally delimited by two parallel longitudinal edges (101);
- shearing the parallel longitudinal edges (101) with the obtainment of two toothings (14) each formed by a sequence of parallel teeth (15) which is extended along said longitudinal extension direction (Y);
- bending said elongated strip (100) with respect to at least one longitudinal line parallel to the longitudinal extension direction (Y) of said elongated strip (100), aimed to arrange, facing and parallel to each other, two flat portions (10) of said elongated strip (100) having first longitudinal connection ends (11) joined together by a connector portion (12) that has 180-degree shape by means of at least one bend obtained by said bending at said at least one longitudinal line, and second longitudinal ends bearing the aforesaid toothings, the teeth (15) of the toothing (14) of a flat portion (10) being, after the bending step, aligned with the teeth (15) of the toothing (14) of the other flat portion (10).

9. Process for obtaining a rack, in particular for gates, according to claim 8, **characterized in that** said bending of said elongated strip (100) approaches, parallel to each other, the two flat portions (10) of said elongated strip (100) with the first longitudinal connection ends (11) joined together by a curved connector portion (12) with 180 degree bend at a median bending line (M).

10. Process for obtaining a rack, in particular for gates, according to claim 8, **characterized in that** it comprises a step of thinning said elongated strip (100) at said median longitudinal line (M) in order to facilitate the bending and oppose the elastic opening return of the flat portions (10), said thinning step being obtained via deformation by means of compression in particular with a roller aimed at enlarging the elongated strip (100) by compressing it on said median longitudinal line (M).

11. Process for obtaining a rack, in particular for gates, according to any one of the claims from 8 to 10, **characterized in that** said shearing step is obtained by means of a press.

12. Process for obtaining a rack, in particular for gates, according to any one of the claims from 8 to 11, **characterized in that** said bending step is obtained by means of a forming machine.

13. Process for obtaining a rack, in particular for gates, according to any one of the claims from 8 to 12, **characterized in that** said shearing and bending operations are obtained with a press in subsequent steps.

14. Process for obtaining a rack, in particular for gates, according to any one of the claims from 8 to 13, **characterized in that** said bending step initially provides for bending said flat portions (10), orienting them with tilt towards each other, and then closing the bend created in said connector portion (12) in order to force the approaching of the two flat portions (10) against each other.

15. Process for obtaining a rack, in particular for gates, according to claim 8, **characterized in that** said connector portion (12) has 180-degree shape by means of said operation of bending via cold deformation of said elongated strip (100) with two or more bends carried out along two or more corresponding longitudinal lines parallel to the extension of said elongated strip (100).

## Patentansprüche

1. Zahnstange, insbesondere für ein verschiebbares Gate, **dadurch gekennzeichnet, dass** es einen linear in einer vorrangigen Längsverlaufsrichtung (Y) verlängerten Körper mit zwei flachen Abschnitten (10) umfasst, die sich gegenüberliegen und im Wesentlichen parallel zueinander sind, die erste Längsverbindungsenden (11) aufweisen, die mit einem Verbinderabschnitt (12) zusammengefügt sind, der eine durch mindestens eine durch Kaltverformung eines Metallstreifens oder -Blechs hergestellte Biegung erzielte 180-Grad-Form aufweist, und zweite Längsenden (13), auf denen sich Verzahnungen (14) befinden, von denen jede aus einer Folge paralleler Zähne (15) gebildet wird, die entlang der genannten Längsverlaufsrichtung (Y) verläuft, wobei die Zähne (15) der Verzahnung (14) eines flachen Abschnitts (10) mit den Zähnen (15) der Verzahnung (14) des anderen flachen Abschnitts (10) ausgerichtet angeordnet sind, um es einem Ritzel (8) zu gestatten, gleichzeitig in beide Verzahnungen (14) einzugreifen.

2. Zahnstange nach Anspruch 1, **dadurch gekennzeichnet, dass** der genannte linear verlängerte Körper aus Stahl besteht.

3. Zahnstange nach Anspruch 1, **dadurch gekennzeichnet, dass** der genannte Verbinderabschnitt (12) eine Form mit einer U-förmigen 180-Grad-Biegung aufweist.

4. Zahnstange nach Anspruch 3, **dadurch gekennzeichnet, dass** der genannte Verbinderabschnitt (12) einen im Wesentlichen oben durch die beiden gegenüberliegenden flachen Abschnitte (1) geschlossenen Schlitz (160) definiert.

5. Zahnstange nach Anspruch 3, **dadurch gekennzeichnet, dass** der genannte Verbinderabschnitt (12) mit der Form einer U-förmigen 180-Grad-Biegung an mindestens einem Zwischenabschnitt (16) eine geringe Stärke aufweist.

6. Zahnstange nach Anspruch 1, **dadurch gekennzeichnet, dass** der genannte Verbinderabschnitt (12) eine durch zwei oder mehrere durch Kaltverformung eines Stahlstreifens oder -Blechs erzielte Biegungen erzielte 180-Grad-Form aufweist.

7. Zahnstange nach einem beliebigen der vorangegangenen Ansprüche, **dadurch gekennzeichnet, dass** die Abschnitte (10, 12) des genannten verlängerten Körpers einen Querschnitt zwischen 2 und 6 mm aufweisen.

8. Verfahren zur Herstellung einer Zahnstange, insbesondere für verschiebbare Gates, **dadurch gekennzeichnet, dass** es die folgenden Arbeitsschritte umfasst:
- Anordnen eines verlängerten Streifens (100) aus Metallwerkstoff mit einer vorrangigen Längsverlaufsrichtung (Y), der seitlich von zwei parallelen Längskanten (101) begrenzt wird;
- Abscheren der parallelen Längskanten (101), so dass zwei Verzahnungen (14) entstehen, von denen jede aus einer Folge paralleler Zähne (15) besteht, die entlang der genannten Längsverlaufsrichtung (Y) verläuft;
- Biegen des genannten länglichen Streifens (100) im Verhältnis zu mindestens einer parallel zu der Längsverlaufsrichtung (Y) des genannten verlängerten Streifens (100) verlaufenden Längslinie, um zwei flache Abschnitte (10) des genannten länglichen Streifens (100) gegenüberliegend und parallel zueinander anzuordnen, die erste längslaufende Verbindungsenden (11) aufweisen, die durch einen Verbinderabschnitt (12) zusammengefügt werden, der eine 180-Grad-Form durch mindestens eine Biegung aufweist, die durch Biegen an der mindestens einen Längslinie erzielt wurde, und zweite längslaufende Enden mit den zuvor genannten Verzahnungen, wobei die Zähne (15) der Verzahnung (14) eines flachen Abschnitts (10) nach dem Biegeschritt mit den Zähnen (15) der Verzahnung (14) auf dem anderen flachen Abschnitt (10) ausgerichtet sind.

9. Verfahren zur Herstellung einer Zahnstange, insbesondere für verschiebbare Gates nach Anspruch 8, **dadurch gekennzeichnet, dass** das genannte Biegen des genannten verlängerten Streifens (100) die beiden flachen Abschnitte (10) parallel zueinander an die ersten Längsverbindungsenden (11) annähert, die durch einen gekrümmten Verbinderabschnitt (12) mit einer 180-Grad-Biegung an der mittleren Biegelinie (M) zusammengefügt sind.

10. Verfahren zur Herstellung einer Zahnstange, insbesondere für verschiebbare Gaste nach Anspruch 8, **dadurch gekennzeichnet, dass** es einen Schritt der Ausdünnung des länglichen Streifens (100) an der genannten längslaufenden Mittellinie (M) umfasst, um das Biegen zu erleichtern und der Rückkehr der elastischen Öffnung der flachen Abschnitte (10) entgegenzuwirken, wobei der genannte Ausdünnungsschritt durch Verformung mittels Druck und insbesondere mit einer Walze erzielt wird, um den verlängerten Streifen (100) durch sein Zusammendrücken auf der genannten längslaufenden Mittellinie (M) zu verbreitern.

11. Verfahren zur Herstellung einer Zahnstange, insbesondere für Gates, nach einem beliebigen der vorangegangenen Ansprüche 8 bis 10, **dadurch gekennzeichnet, dass** der genannte Scherschritt anhand einer Presse erzielt wird.

12. Verfahren zur Herstellung einer Zahnstange, insbesondere für Gates, nach einem beliebigen der vorangegangenen Ansprüche 8 bis 11, **dadurch gekennzeichnet, dass** der genannte Biegeschritt anhand einer Umformmaschine ausgeführt wird.

13. Verfahren zur Herstellung einer Zahnstange, insbesondere für Gates, nach einem beliebigen der vorangegangenen Ansprüche 8 bis 12, **dadurch gekennzeichnet, dass** die genannten Scher- und Biegevorgänge in aufeinanderfolgenden Schritten anhand einer Presse erzielt werden.

14. Verfahren zur Herstellung einer Zahnstange, insbesondere für Gates, nach einem beliebigen der vorangegangenen Ansprüche 8 bis 13, **dadurch gekennzeichnet, dass** der genannte Biegeschritt anfänglich das Biegen der genannten flachen Abschnitte (10) umfasst, so dass diese mit einer Neigung zueinander ausgerichtet werden und dann die in dem genannten Verbinderabschnitt (12) entstandene Biegung geschlossen wird, um das Annähern der beiden flachen Abschnitte (10) aneinander herbeizuführen.

15. Verfahren zur Herstellung einer Zahnstange, insbesondere für Gates, nach Anspruch 8, **dadurch gekennzeichnet**, das der genannte Verbinderabschnitt (12) durch den genannten Biegevorgang mittels Kaltverformung des genannten länglichen Streifens (100) in zwei oder mehr Biegungen entlang zwei oder mehr entsprechenden längslaufenden, zum Verlauf des genannten länglichen Streifens (100) parallelen Linien eine Form von 180 Grad aufweist.

## Revendications

1. Crémaillère, notamment pour une porte coulissante, **caractérisée en ce qu'**elle comprend un corps allongé linéairement dans une direction d'extension principalement longitudinale (Y), dotée de deux parties plates (10) en regard et sensiblement parallèles l'une de l'autre ayant des premières extrémités de connexion longitudinales (11) fixées ensemble par un élément de liaison (12) ayant une forme à 180 degrés au moyen d'au moins une courbe obtenue par déformation à froid de 2 bandes ou tôles métalliques et des deuxièmes extrémités longitudinales (13) portant des dentures (14) chacune formée par une séquence de dents parallèles (15) qui s'étendent le long de ladite direction d'extension longitudinale (Y), avec les dents (15) de la denture (14) d'une partie plate (10) placées alignées sur les dents (15) de la denture (14) de l'autre partie plate (10), afin de permettre à un pignon (8) de s'engager simultanément dans les deux dentures (14).

2. Crémaillère selon la revendication 1, **caractérisée en ce que** ledit corps allongé linéairement est réalisé en acier.

3. Crémaillère selon la revendication 1, **caractérisée en ce que** ledit élément de liaison (12) a la forme d'une courbe en U de 180 degrés.

4. Crémaillère selon la revendication 3, **caractérisée en ce que** ledit élément de liaison (12) définit une fente (160) essentiellement fermée en haut par lesdites deux parties plates en regard l'une de l'autre (10).

5. Crémaillère selon la revendication 3, **caractérisée en ce que** ledit élément de liaison (12) en forme d'une courbe en U de 180 degrés, a sur au moins une de ses sections intermédiaires (16), une faible épaisseur.

6. Crémaillère selon la revendication 1, **caractérisée en ce que** ledit élément de liaison (12) a une forme à 180 degrés au moyen de deux ou plusieurs courbes obtenues par déformation a froid d'une bande ou plaque d'acier.

7. Crémaillère selon une ou plusieurs des revendications précédentes, **caractérisée en ce que** les parties (10, 12) dudit corps allongé ont une section transversale comprise entre 2 et 6 mm.

8. Procédé pour l'obtention d'une crémaillère, en particulier pour portes coulissantes, **caractérisé en ce qu'**il comprend les étapes opérationnelles suivantes :
- mise en place d'une bande allongée (100) constituée de matériau métallique fourni avec une direction d'extension principalement longitudinale (Y) et latéralement délimitée par deux bords parallèles longitudinaux (101) ;
- cisaillage des bords parallèles longitudinaux (101) avec obtention de deux dentures (14), chacune formée par une séquence de dents parallèles (15) qui s'étendent le long de ladite direction d'extension longitudinale (Y) ;
- pliage desdites bandes allongées (100) par rapport à au moins une ligne longitudinale parallèle à la direction d'extension longitudinale (Y) de ladite bande allongée (100), visant à mettre en place en regard l'une de l'autre et de façon parallèle, deux parties plates (10) de ladite bande allongée (100) ayant des premières extrémités de connexion longitudinales (11) fixées ensemble par un élément de liaison (12) ayant une forme à 180 degrés au moyen d'au moins une courbe obtenue par ledit pliage à ladite au moins une ligne longitudinale et des deuxièmes extrémités longitudinales portant lesdites dentures, les dents (15) des dentures (14) d'une partie plate (10) étant, après la phase de pliage, alignées sur les dents (15) de la denture (14) de l'autre partie plate (10).

9. Procédé pour l'obtention d'une crémaillère, en particulier pour portes coulissantes, selon la revendication 8, **caractérisé en ce que** ledit pliage de ladite bande allongée (100) approche, de façon parallèle l'une à l'autre, les deux parties plates (10) de ladite bande allongée (100) des premières extrémités de connexion longitudinales (11) fixées ensemble par un élément de liaison courbe (12) avec une courbe de 180 degrés sur une ligne de pliage médiane (M).

10. Procédé pour l'obtention d'une crémaillère, en particulier pour portes coulissantes, selon la revendication 8, **caractérisé en ce qu'**il comprend une phase d'amincissement de ladite bande allongée (100) sur ladite ligne médiane longitudinale (M), afin de faciliter le pliage et faire opposition au retour élastique d'ouverture des parties plates (10), ladite phase d'amincissement étant obtenue par déformation au moyen de compression, en particulier à l'aide d'un rouleau destiné à élargir la bande allongée (100) en la comprimant sur ladite ligne médiane longitudinale (MM).

11. Procédé pour l'obtention d'une crémaillère, en particulier pour portes coulissantes, selon une quelconque des revendications 8 à 10, **caractérisé en ce que** ladite phase de cisaillage est obtenue au moyen d'une presse.

12. Procédé pour l'obtention d'une crémaillère, en particulier pour portes coulissantes, selon une quelconque des revendications 8 à 11, **caractérisé en ce que** ladite phase de pliage est obtenue au moyen d'une machine de formage.

13. Procédé pour l'obtention d'une crémaillère, en particulier pour portes coulissantes, selon une quelconque des revendications 8 à 12, **caractérisé en ce que** lesdites opérations de cisaillage et pliage sont obtenues au moyen d'une presse par étapes successives.

14. Procédé pour l'obtention d'une crémaillère, en particulier pour portes coulissantes, selon une quelconque des revendications 8 à 13, **caractérisé en ce que** ladite phase de pliage prévoit le pliage desdites parties plates (10), en les orientant par basculement l'une vers l'autre, et en fermant ensuite la courbe créée dans ledit élément de liaison (12) afin de forcer l'approche des deux parties plates (10) l'une contre l'autre.

15. Procédé pour l'obtention d'une crémaillère, en particulier pour portes coulissantes, selon la revendication 8, **caractérisé en ce que** ledit élément de liaison (12) a une forme à 180 degrés obtenue par ladite opération de pliage par déformation à froid de ladite bande allongée (100) avec deux ou plusieurs courbes effectuées le long de deux ou plusieurs lignes longitudinales correspondantes parallèles à l'extension de ladite bande allongée (100).
